# EUROPÄISCHE PATENTSCHRIFT

(11) **EP 0 903 098 B1**
(45) Veröffentlichungstag und Bekanntmachung des Hinweises auf die Patenterteilung: **08.10.2003**
(21) Anmeldenummer: 98810824.7
(22) Anmeldetag: 21.08.1998
(51) Int. Cl.: A47J 31/54, A47J 31/057

(54) **Filterkaffeemaschine**
Coffee percolator
Machine à café

(30) Priorität: 11.09.1997 CH 214097
(43) Veröffentlichungstag der Anmeldung: 24.03.1999
(73) Patentinhaber: Fianara International B.V., 1079 LH Amsterdam (NL)
(72) Erfinder: Schmed, Arthur, CH-8635 Oberdürnten (CH)
(74) Vertreter: Rottmann, Maximilian R.

(56) Entgegenhaltungen:
- EP-A- 0 797 945
- DE-A- 2 952 556
- DE-A- 4 204 746
- DE-A- 4 240 429
- DE-A- 19 545 111

## Beschreibung

Die Erfindung betrifft eine nach dem Oberbegriff des Anspruchs 1 ausgebildete Filterkaffeemaschine.

Als Filterkaffeemaschine wird im vorliegenden Fall eine Kaffeemaschine bezeichnet, bei der das Brühwasser unter der Wirkung der Schwerkraft drucklos durch das in einem Filter aufgenommene Kaffeepulver fliesst. Zum Erhitzen und Fördern des Wassers weisen solche Filterkaffeemaschinen ein als Durchlauferhitzer wirkendes Heizelement auf. Eine Pumpe wird nicht benötigt, da sich das Wasser beim Erhitzen nach den thermodynamischen Grundsätzen ausdehnt und intervallweise über eine Steigleitung zu einem Auslass strömt, von wo es anschliessend das Kaffeepulver durchfliessen kann. Wünschenswert bei dieser Art von Kaffeemaschinen ist zudem ein Dampfauslass, mittels welchem Getränke wie beispielsweise Milch erhitzt werden können.

Aus der DE 195 45 11 ist eine Brühgetränkezubereitungsmaschine in Form einer Kaffeemaschine bekannt, die eine Dampferzeugungseinrichtung aufweist. Letztere ist mit einem elektrisch beheizten Wassererhitzer versehen, der als Durchlauferhitzer ausgebildet ist und ein Gemisch aus Wasser und Dampf erzeugt. Der Durchlauferhitzer ist mit einem Dampfabscheider verbunden, mittels welchem der Dampf aus dem Dampf-Wasser-Gemisch abgeschieden werden kann. Der abgeschiedene Dampf wird über eine Dampfleitung direkt zu einer Aufschäumdüse geleitet, währenddem das im Dampfabscheider abgeschiedene Wasser über eine Abflussleitung in die vom Wasservorratsbehälter zum Durchlauferhitzer führende Auslassleitung zurückfliesst. Der Nachteil einer derartig ausgebildeten Brühgetränkezubereitungsmaschine ist darin zu sehen, dass nur dann Dampf erzeugt werden kann, wenn im Wasservorratsbehälter Wasser eingefüllt ist. Wenn jedoch mit der Filterkaffeemaschine zuvor Filter-Kaffee aufgebrüht wurde, so ist der Wasservorratsbehälter jeweils leer, da für den Aufbrühvorgang prinzipbedingt jeweils sämtliches Wasser des Wasservorratsbehälters sowie das ggf. im Dampfabscheider aufgenommene Wasser verwendet wird. Somit muss nach einem Kaffeezubereitungszyklus zuerst wieder Wasser in den Wasservorratsbehälter eingefüllt werden, bevor Dampf erzeugt werden kann.

Aus der DE 35 37 063 ist eine weitere, als elektrischer Getränkewärmer bezeichnete Filterkaffeemaschine bekannt, welche mit einer Anordnung zur Erzeugung von Dampf versehen ist. Diese Anordnung umfasst einen Dampfabscheider, dessen Wasserauslass mit der vom Frischwasserbehälter zum Durchlauferhitzer führenden Kaltwasserleitung verbunden ist, so dass das vom Durchlauferhitzer abgeschiedene Wasser wieder in die Kaltwasserleitung zurückfliesst. Auch bei dieser Ausführungsform einer Filterkaffeemaschine muss somit nach einem Kaffeezubereitungszyklus zuerst wieder Wasser in den Wasservorratsbehälter eingefüllt werden, bevor Dampf erzeugt werden kann.

Ein weiterer Nachteil der gattungsgemäss ausgebildeten Kaffeemaschinen anhaft besteht darin, dass die Anordnung zur Erzeugung von Dampf immer einen Kompromiss darstellt, da dieselbe Anordnung sowohl zur Erzeugung von Brühwasser wie auch von Dampf verwendet wird.

Schliesslich ist aus der DE 42 40 429 A1 eine Kaffeemaschine mit einer als Filterzentrifuge ausgebildeten Brüheinheit bekannt. Der Wasservorratsbehälter ist mit einer Hauptkammer und einer Nebenkammer versehen. Die Hauptkammer ist mit einem Durchlauferhitzer verbunden, während der Nebenkammer ein Boiler zugeordnet ist. An den Dampfraum des Boilers ist eine zur Abgabe von Dampf vorgesehene Dampfabgabeleitung angeschlossen. Vom Durchlauferhitzer führt ein Steigrohr zu einem Zwischenspeicher, welch letzterer über ein Saugrohr mit der Filterzentrifuge verbunden ist. Beim Ausführungsbeispiel gemäss der Fig. 4 ist ein zweiteiliger Wasservorratsbehälter vorgesehen. Die Hauptkammer dieses Wasservorratsbehälters ist wiederum mit einem als Durchlauferhitzer ausgebildeten Heizelement verbunden, während die Nebenkammer mit dem Boiler in Verbindung steht, der dem Erzeugen von Dampf dient. Das Heizelement und der Boiler sind zu einem ringförmigen Bauteil verbunden. Am Ausgang des Boilers ist zum einen die Dampfabgabeleitung angeschlossen und zum anderen eine mit der Hauptkammer des Wasservorratsbehälters in Verbindung stehende Leitung.

Es ist daher die Aufgabe der Erfindung, eine Filterkaffeemaschine gemäss dem Oberbegriff des Anspruchs 1 derart weiterzubilden, dass jederzeit, unabhängig vom Füllstand des Frischwassertanks, Dampf erzeugt werden kann.

Diese Aufgabe wird durch die im Kennzeichen des Anspruchs 1 aufgeführten Merkmale gelöst.

Die Grundidee der vorgeschlagenen Anordnung zur Erzeugung von Dampf besteht einerseits darin, dass nebst dem eigentlichen Frischwassertank ein zweiter mit Frischwasser befüllbarer Wasservorratsbehälter vorgesehen ist, aus welchem das für die Erzeugung von Dampf benötigte Wasser entnommen wird. Im weiteren ist die Anordnung zur Erzeugung von Dampf unabhängig von der Anordnung zur Erzeugung von Brühwasser, wobei diese als Kreislauf ausgebildet ist. Durch diese unabhängige Ausbildung kann die Anordnung zur Erzeugung von Dampf optimal an die gestellte Aufgabe angepasst werden. Um schliesslich sicherzustellen, dass der erzeugte Dampf möglichst trocken ist, wird vorgeschlagen, dass der Wasservorratsbehälter gleichzeitig als Dampfabscheider ausgebildet ist.

Bevorzugte Ausführungsformen der Erfindung sind in den abhängigen Ansprüchen 2 bis 11 umschrieben.

Schliesslich wird bei einer bevorzugten Weiterbildung der Kaffeemaschine vorgeschlagen, den als Dampfabscheider ausgebildeten Wasservorratsbehälter mit Mitteln zu versehen, welche sicherstellen, dass bei der Erzeugung von Dampf innerhalb des Wasservorratsbehälters ein Überdruck vorherrscht. Durch diesen Überdruck wird eine gleichmässige Dampferzeugung begünstigt.

Nachfolgend wird ein Ausführungsbeispiel der Erfindung anhand von Zeichnungen näher erläutert. In diesen Zeichnungen zeigt:
- Fig.1: den prinzipiellen Aufbau einer Filterkaffeemaschine mit einer Anordnung zur Erzeugung von Dampf in einem ersten Betriebszustand;
- Fig.2: die Filterkaffeemaschine gemäss Fig. 1 in einem zweiten Betriebszustand, und
- Fig.3: die Filterkaffeemaschine gemäss Fig. 1 in einem dritten Betriebszustand.

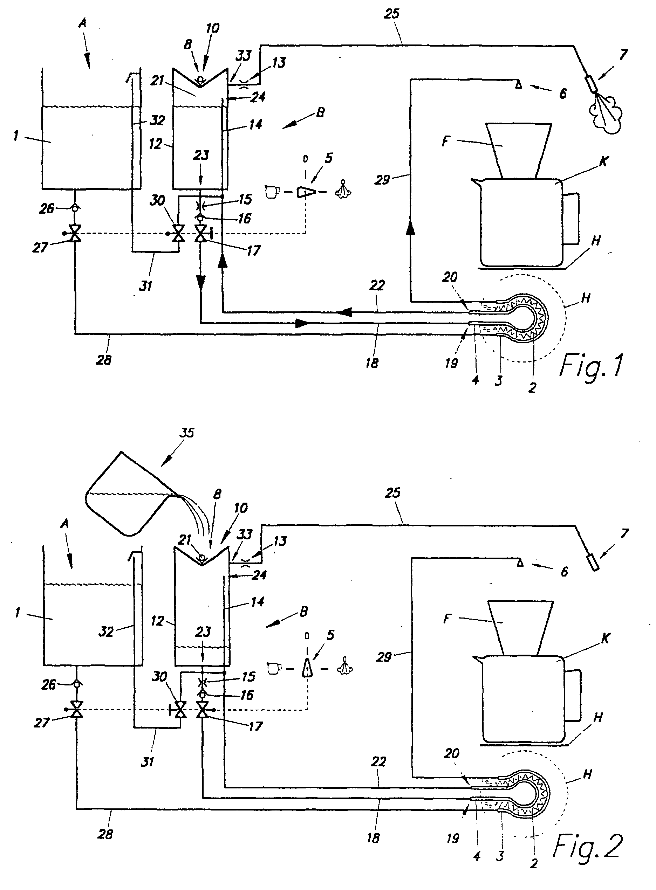

Anhand der Fig. 1, welche die Filterkaffeemaschine in schematischer Darstellung zeigt, soll der prinzipielle Aufbau der Kaffeemaschine näher erläutert werden. In dem in der Fig. 1 gezeigten Betriebszustand wird mit der Kaffeemaschine Dampf erzeugt.

Wie die bisherigen Filterkaffeemaschinen weist auch die erfindungsgemäss ausgebildete Kaffeemaschine eine Anordnung zur Erzeugung von Brühwasser A auf. Diese Anordnung A umfasst einen Frischwassertank 1, ein mit einer elektrischen Heizspirale versehenes Heizelement 2, einen am Heizelement 2 vorbeiführenden Rohrabschnitt 3, einen Wählschalter 5 sowie einen Heisswasserauslass 6 auf. Ausserdem sind eine Kaltwasserleitung 28, eine Brühwasserleitung 29, ein in der Kaltwasserleitung 28 angeordnetes Rückschlagventil 26 sowie ein Absperrorgan 27 vorgesehen.

Nebst der Anordnung zur Erzeugung von Brühwasser A ist eine separate Anordnung zur Erzeugung von Dampf B vorgesehen, welche im wesentlichen aus einem am Heizelement 2 vorbeiführenden zweiten Rohrabschnitt 4, einem Wasservorratsbehälter 10 sowie einem Dampfauslass 7 besteht. Der Wasservorratsbehälter 10 ist gleichzeitig als Dampfabscheider ausgebildet, indem der Auslass 20 des zweiten Rohrabschnitts 4 über eine Leitung 22 in den Wasservorratsbehälter 10 mündet. Am Dampf-Auslass 33 des Wasservorratsbehälters 10 ist eine Querschnittsverengung 13 vorgesehen, welche sicherstellt, dass im Wasservorratsbehälter 10 ein gewisser Überdruck aufgebaut werden kann.

Zum Auffüllen des Wasservorratsbehälters 10 ist auf dessen Oberseite eine Einfüllöffnung 8 angeordnet. In das Innere des Wasservorratsbehälter 10 führt eine Steigleitung 14, deren Austrittsöffnung 24 oberhalb des maximalen Füllpegels angeordnet ist. Am Wasser-Auslass 23 des Wasservorratsbehälters 10 sind eine Verengung 15, ein Sperrventil 16 und ein mit dem Wählschalter 5 in Wirkverbindung stehendes Absperrorgan 17 vorgesehen. Der Wasser-Auslass 23 des Wasservorratsbehälters 10 ist über eine Leitung 18 mit dem einlasseitigen Ende 19 des zweiten Rohrabschnitts 4 verbunden. Durch die beschriebene Ausbildung, bei der die Anordnung zur Erzeugung von Dampf B als geschlossener Kreislauf ausgebildet ist, wird das zur Erzeugung von Dampf notwendige Wasser direkt aus dem Wasservorratsbehälter 10 zugeführt. Dadurch kann auch nach dem Aufbrühen von Kaffee Dampf erzeugt werden, ohne dass zuerst der Frischwassertank 1 aufgefüllt werden muss. Dabei werden im Wasservorratsbehälter 10 die im Dampf mitgeführten Wasserpartikel ausgeschieden, so dass am Dampfauslass 7 trockener Dampf zur Verfügung steht.

Der besseren Übersichtlichkeit wegen sind das Heizelement 2 sowie die beiden am Heizelement vorbeiführenden Rohrabschnitte 3, 4 in einer Ansicht von oben gezeigt, währenddem die übrigen Elemente in einer Seitenansicht dargestellt sind.

Eine in den Frischwassertank 1 führende Steigleitung 32 ist über eine mit einem weiteren Sperrventil 30 versehene Leitung 31 mit der Dampfleitung 22 verbunden. Die Leitung 31 ist dazu vorgesehen, einen in der Dampfleitung 22 sowie im Wasservorratsbehälter 10 herrschenden Überdruck bei Bedarf abzubauen.

Zur Aufnahme des aufzubrühenden Kaffeepulvers ist ein Filtertrichter F und für das fertige Kaffeegetränk ein mit K bezeichneter Kaffeekrug vorgesehen. Über dem Heizelement 2 ist in bekannter Weise eine Heizplatte H angeordnet, welche unterhalb des Kaffeekrugs in einer Seitenansicht sowie andeutungsweise auch durch eine unterbrochen eingezeichnete Linie in einer Draufsicht dargestellt ist. Die lediglich als Linien 18, 22, 28, 29 eingezeichneten Verbindungsleitungen innerhalb der Kaffeemaschine sind vorzugsweise flexibel ausgebildet.

Da die prinzipielle Funktionsweise derartig aufgebauter Filterkaffeemaschinen bekannt ist, wird nachfolgend nur auf die im Zusammenhang mit der Erfindung wesentlichen Elemente und deren Wirkungsweise eingegangen.

Wenn der Wählschalter in der in Fig. 1 gezeigten, rechten Stellung "Dampf steht, so fliesst Wasser aus dem Wasservorratsbehälter 10 über das Sperrventil 16, das geöffnete Absperrorgan 17 sowie die Verbindungsleitung 18 in den zweiten Rohrabschnitt 4, wo es verdampft wird. Dieser Dampf gelangt über die Verbindungsleitung 22 in den Wasservorratsbehälter 10, wo mitgeführte Wasserpartikel ausgeschieden werden. Über den Dampfauslass 33 des Wasservorratsbehälters 10 strömt der Dampf über die Dampfabgebeleitung 25 zur Dampfdüse 7, über welche er schliesslich austreten kann. Damit innerhalb des Wasservorratsbehälters 10 ein bestimmter Überdruck aufgebaut werden kann und um ein Entweichen des Dampfes aus dem Wasservorratsbehälter 10 über den Frischwassereinlass 8 zu verhindern, ist ein Ventil 21 vorgesehen. Das Ventil 21 wirkt gleichzeitig als Überdruckventil 21, welches bei Überschreiten eines vorgegebenen Sollwerts aus Sicherheitsgründen öffnet.

Durch die Verengung 15 am Wasser-Auslass des Wasservorratsbehälters 10 wird die dem zweiten Rohrabschnitt 4 zugeführte Wassermenge derart beschränkt, dass die Heizleistung des Heizelements 2 ausreicht, das pro Zeiteinheit zugeführte Wasser praktisch vollständig zu verdampfen. Dadurch, dass das am Auslass des Frischwassertanks 1 angeordnete Absperrorgan 27 in diesem Betriebszustand geschlossen ist, fliesst kein Wasser durch den ersten Rohrabschnitt 3, so dass praktisch die gesamte Heizleistung zum Verdampfen der in den zweiten Rohrabschnitt 4 gelangenden Wassermenge zur Verfügung steht.

Die erwähnte Ausbildung des Wasservorratsbehälters 10 gewährleistet, dass durch das Verdampfen von Wasser ein Überdruck im Wasservorratsbehälter 10 aufgebaut wird. Dieser Überdruck bewirkt, dass das Wasser kontinuierlich aus dem Wasservorratsbehälter 10 über die Leitung 18 in den zweiten Rohrabschnitt 4 fliesst, wodurch eine kontinuierliche Dampferzeugung sichergestellt wird.

Fig. 2 zeigt die Filterkaffeemaschine im Betriebszustand "0". In diesem Betriebszustand kann ein allfälliger, im Wasservorratsbehälter 10 vorhandener Überdruck abgebaut werden. Mit dem Umschalten des Wählschalters 5 von der Stellung "Dampf" in die Stellung "0" wird das Absperrorgan 30 geöffnet. Dadurch kann der in der Dampfleitung 22 sowie im Wasservorratsbehälter 10 herrschende Überdruck über die Leitung 31 und die Steigleitung 32 in den Frischwassertank 1 entweichen. Durch das Öffnen des Absperrorgans 30 wird zudem sichergestellt, dass das Austreten von Dampf über die Düse 7 augenblicklich gestoppt wird, wodurch die Gefahr von Verbrennungen gebannt wird. Nachdem der Überdruck im Wasservorratsbehälter 10 abgebaut ist, kann dieser mit Frischwasser aufgefüllt werden, wie dies andeutungsweise durch einen mit Wasser gefüllten Krug 35 dargestellt ist. Zum Auffüllen muss das Ventil 21 manuell leicht angehoben werden.

Damit der Wasservorratsbehälter 10 nicht separat mit Wasser aufgefüllt werden muss, könnte eine alternative Ausführungsform darin bestehen, dass der Wasservorratsbehälter 10 über eine Verbindungsleitung (nicht eingezeichnet) mit dem Frischwassertank 1 verbunden wird, so dass der Wasservorratsbehälter 10 beim Auffüllen des Frischwassertanks 1 jeweils auch mitaufgefüllt wird. Um beim Aufbrühen von Kaffee ein Zurückfliessen des Wassers aus dem Wasservorratsbehälter 10 in den Frischwassertank 1 zu verhindern, müsste die Verbindungsleitung mit einem Rückschlagventil versehen werden.

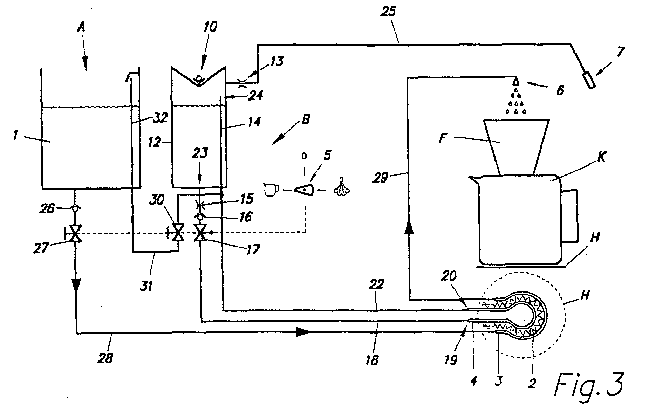

Fig. 3 zeigt die Kaffeemaschine im dritten Betriebszustand beim Aufbrühen von Kaffee. Durch das Verdrehen des Wählschalters 5 in die linke Stellung wird das Absperrorgan 27 am Auslass des Frischwassertanks 1 geöffnet, währenddem das Absperrorgan 17 am Auslass 23 des Wasservorratsbehälters 10 geschlossen wird. Dadurch kann Frischwasser über die Leitung 28 in den ersten Rohrabschnitt 3 fliessen, wo es erhitzt wird. Das erhitzte Wasser gelangt über die Steigleitung 29 zum Heisswasserauslass 6 von wo es in den Filtertrichter F einfliesst, das darin aufgenommene Kaffeepulver aufbrüht und schliesslich als Kaffeegetränk in den Krug K fliesst. Eine Pumpe zum Fördern des Wassers wird bei einer derartigen Kaffeemaschine nicht benötigt, da sich das Wasser beim Erhitzen nach den thermodynamischen Grundsätzen ausdehnt und stossweise -Ventil 26 alternierend offen und geschlossen- über die Steigleitung 29 zum Auslass 7 strömt. Da die Funktionsweise derartiger Kaffeemaschinen bekannt ist, erübrigt es sich, an dieser Stelle näher darauf einzugehen.

Um eine gute Wärmeübertragung zwischen dem Heizelement 2 und den beiden Rohrabschnitten 3, 4 zu gewährleisten, weist das Heizelement 2 vorzugsweise eine aus Aluminium bestehende Ummantelung auf, welche mit den beiden vorzugsweise ebenfalls aus Aluminium gefertigten Rohrabschnitten 3, 4 verlötet ist. Wie in den Zeichnungen angedeutet, sind sowohl das Heizelement 2 wie auch die beiden Rohrabschnitte 3, 4 gebogen ausgeführt.

Bei einer derartig ausgestalteten Kaffeemaschine kann mit einem einzigen Heizelement 2 sowohl Wasser zum Aufbrühen des Kaffeepulvers erhitzt wie auch Dampf erzeugt werden. Durch das Vorsehen einer separaten Anordnung zur Erzeugung von Dampf, welche einen autonomen, mit Frischwasser befüllbaren Wasservorratsbehälter 10 aufweist, kann jederzeit Dampf erzeugt werden und zwar unabhängig davon, ob im Frischwassertank 1 Wasser vorhanden ist oder nicht.

## Patentansprüche

1. Filterkaffeemaschine mit einem Frischwassertank (1), einer Anordnung zur Erzeugung von Brühwasser (A) sowie einer Anordnung zur Erzeugung von Dampf (B), welch letztere einen mit Frischwasser befüllbaren Wasservorratsbehälter (10) sowie eine Dampfabgabeleitung (25) umfasst, **dadurch gekennzeichnet, dass** die Anordnung zur Erzeugung von Dampf (B) als separater Kreislauf ausgebildet ist, **dass** der Wasservorratsbehälter (10) gleichzeitig als Dampfabscheider ausgebildet ist und **dass** die Dampfabgabeleitung (25) am Wasservorratsbehälter (10) angeschlossen ist.

2. Filterkaffeemaschine nach Anspruch 1, **dadurch gekennzeichnet, dass** die Anordnung zur Erzeugung von Dampf (B) unabhängig von der Anordnung zur Erzeugung von Brühwasser (A) ist und das zur Erzeugung des Dampfs vorgesehene Wasser aus dem Wasservorratsbehälter (10) zuführbar ist.

3. Filterkaffeemaschine nach Anspruch 1 oder 2, **dadurch gekennzeichnet, dass** der Wasservorratsbehälter (10) einen Dampfauslass (33) aufweist und **dass** die Anordnung zur Erzeugung von Dampf (B) Mittel (13) umfasst, welche sicherstellen, dass bei der Erzeugung von Dampf innerhalb des Wasservorratsbehälters (10) ein Überdruck vorherrscht.

4. Filterkaffeemaschine nach Anspruch 3, **dadurch gekennzeichnet, dass** die Mittel zur Erzeugung des Überdrucks im Wasservorratsbehälter (10) eine Querschnittsverengung (13) am Dampfauslass (33) des Wasservorratsbehälters (10) oder eine zu einer Dampfdüse (7) führende Dampfabgabeleitung (25) umfassen.

5. Filterkaffeemaschine nach einem der vorhergehenden Ansprüche, **dadurch gekennzeichnet, dass** ein eine zentrale Heizspirale und zwei in thermischem Kontakt mit der Heizspirale stehende Rohrabschnitte (3, 4) umfassendes Heizelement (2) vorgesehen ist, wobei der erste Rohrabschnitt (3) zum Erhitzen des Brühwassers und der zweite Rohrabschnitt (4) zur Erzeugung des Dampfs vorgesehen ist.

6. Filterkaffeemaschine nach einem der vorhergehenden Ansprüche, **dadurch gekennzeichnet, dass** die Anordnung zur Erzeugung von Dampf (B) Mittel (15) zur Begrenzung der dem zweiten Rohrabschnitt (4) pro Zeiteinheit aus dem Wasservorratsbehälter (10) zufliessenden Wassermenge aufweist.

7. Filterkaffeemaschine nach Anspruch 6, **dadurch gekennzeichnet, dass** der Auslass (20) des zweiten Rohrabschnitts (4) über eine Leitung (22) und eine Steigleitung (14) in den Wasservorratsbehälter (10) mündet, wobei der Auslass der Steigleitung (14) oberhalb des maximalen Füllpegels des Wasservorratsbehälters (10) angeordnet ist.

8. Filterkaffeemaschine nach einem der vorhergehenden Ansprüche, **dadurch gekennzeichnet, dass** der Wasservorratsbehälter (10) eine Einfüllöffnung (8) für Frischwasser aufweist, und **dass** im Bereich der Einfüllöffnung ein Ventil (21) vorgesehen ist.

9. Filterkaffeemaschine nach einem der vorhergehenden Ansprüche, **dadurch gekennzeichnet, dass** der Frischwassertank (1) über eine Leitung (31) direkt oder indirekt mit dem Innenraum des Wasservorratsbehälters (10) verbunden ist.

10. Filterkaffeemaschine nach Anspruch 9, **dadurch gekennzeichnet, dass** in der vom Wasservorratsbehälter (10) zum Frischwassertank (1) führenden Leitung (31) ein Ventil (30) angeordnet ist, über welches im geöffneten Zustand der im Wasservorratsbehälter (10) herrschende Überdruck abbaubar ist.

11. Filterkaffeemaschine nach Anspruch 10, **dadurch gekennzeichnet, dass** das Ventil (30) mit einem für die Bedienung der Kaffeemaschine vorgesehenen Wählschalter (5) gekoppelt ist.

## Claims

1. Filter-coffee machine having a clean-water tank (1), an arrangement for generating brewing water (A) and an arrangement for generating steam (B), the latter arrangement comprising a water-supply tank (10), which can be filled with clean water, and a steam-discharge line (25), **characterized in that** the arrangement for generating steam (B) is designed as a separate circuit, **in that** the water-supply tank (10) is designed, at the same time, as a steam separator, and **in that** the steam-discharge line (25) is connected to the water-supply tank (10).

2. Filter-coffee machine according to Claim 1, **characterized in that** the arrangement for generating steam (B) is independent of the arrangement for generating brewing water (A), and. **in that** water provided for generating the steam can be fed from the water-supply tank (10).

3. Filter-coffee machine according to Claim 1 or 2, **characterized in that** the water-supply tank (10) has a steam outlet (33), and **in that** the arrangement for generating steam (B) comprises means (13) which ensure that a positive pressure prevails within the water-supply tank (10) when steam is generated.

4. Filter-coffee machine according to Claim 3, **characterized in that** the means for generating the positive pressure in the water-supply tank (10) comprise a cross-sectional narrowing (13) at the steam outlet (33) of the water-supply tank (10) or a steam-discharge line (25) leading to a steam nozzle (7).

5. Filter-coffee machine according to one of the preceding claims, **characterized in that** there is provided a heating element (2) which comprises a central heating coil and two tube portions (3, 4) which are in thermal contact with the heating coil, the first tube portion (3) being provided for heating the brewing water and the second tube portion (4) being provided for generating the steam.

6. Filter-coffee machine according to one of the preceding claims, **characterized, in that** the arrangement for generating steam (B) has means (15) for limiting the quantity of water which. flows to the second tube portion (4) per unit of time from the water-supply tank (10).

7. Filter-coffee machine according to Claim 6, **characterized in that** the outlet (20) of the second tube portion (4) opens out into the water-supply tank (10) via a line (22) and an ascending line (14), the outlet of the ascending line (14) being arranged above the maximum filling level of the water-supply tank (10).

8. Filter-coffee machine according to one of the preceding claims, **characterized in that** the water-supply tank (10) has an introduction opening (8) for clean water, and **in that** a valve (21) is provided in the region of the introduction opening.

9. Filter-coffee machine according to one of the preceding claims, **characterized in that** the clean-water tank (1) is connected to the interior of the water-supply tank (10) directly or indirectly via a line (31).

10. Filter-coffee machine according to Claim 9, **characterized in that** the line (31) leading from the water-supply tank (10) to the clean-water tank (1) contains a valve (30) via which, in the open state, it is possible to dissipate the positive pressure prevailing in the water-supply tank (10).

11. Filter-coffee machine according to Claim 10, **characterized in that** the valve (30) is coupled to a selector switch (5) provided for operating the coffee machine.

## Revendications

1. Machine à café filtre comprenant une cuve d'eau fraîche (1), un agencement servant à produire de l'eau chaude (A) et un agencement servant un produire de la vapeur d'eau (B), ce dernier comprenant un réservoir d'eau (10) pouvant être rempli d'eau fraîche et une tuyauterie d'évacuation de vapeur d'eau (25), **caractérisée en ce que** l'agencement servant à produire de la vapeur d'eau (B) est réalisé sous forme d'un circuit séparé, **en ce que** le réservoir d'eau (10) est en même temps réalisé en tant que séparateur de vapeur d'eau et **en ce que** la tuyauterie d'évacuation de vapeur d'eau (25) est raccordée au réservoir d'eau (10).

2. Machine à café filtre suivant la revendication 1, **caractérisée en ce que** l'agencement servant à produire de la vapeur d'eau (B) est indépendant de l'agencement servant à produire de l'eau chaude (A) et l'eau prévue pour la production de la vapeur d'eau peut être acheminée à partir du réservoir d'eau (10).

3. Machine à café filtre suivant la revendication 1 ou 2, **caractérisée en ce que** le réservoir d'eau (10) comporte une sortie de vapeur d'eau (33) et **en ce que** l'agencement servant à produire de la vapeur d'eau (B) comprend des moyens (13) qui donnent l'assurance que, lors de la production de vapeur d'eau, une surpression règne à l'intérieur du réservoir d'eau (10).

4. Machine à café filtre suivant la revendication 3, **caractérisée en ce que** les moyens servant à produire la surpression dans le réservoir d'eau (10) comprennent un étranglement de section transversale (13) situé sur la sortie de vapeur d'eau (33) du réservoir d'eau (10) ou une tuyauterie d'évacuation d'eau chaude (25) menant à un éjecteur de vapeur d'eau (7).

5. Machine à café filtre suivant l'une des revendications précédentes, **caractérisée en ce qu'**il est prévu un élément chauffant (2) comportant une spirale chauffante centrale et deux tronçons de tube (3, 4) se trouvant en contact thermique avec la spirale chauffante, le premier tronçon de tube (3) étant prévu pour chauffer l'eau chaude et le second tronçon de tube (4) pour produire la vapeur d'eau.

6. Machine à café filtre suivant l'une des revendications précédentes, **caractérisée en ce que** l'agencement servant à produire de la vapeur d'eau (B) comprend des moyens (15) servant à limiter la quantité d'eau s'écoulant vers le second tronçon de tube (4) par unité de temps à partir du réservoir d'eau (10).

7. Machine à café filtre suivant la revendication 6, **caractérisée en ce que** la sortie (20) du second tronçon de tube (4) débouche dans le réservoir d'eau (10) par l'intermédiaire d'une tuyauterie (22) et d'un tuyau de montée (14), la sortie du tuyau de montée (14) étant disposée au-dessus du niveau maximal de remplissage du réservoir d'eau (10).

8. Machine à café filtre suivant l'une des revendications précédentes, **caractérisée en ce que** le réservoir d'eau (10) comporte un orifice de remplissage (8) pour de l'eau fraîche et **en ce qu'**une valve (21) est prévue dans la zone de l'orifice de remplissage.

9. Machine à café filtre suivant l'une des revendications précédentes, **caractérisée en ce que** la cuve d'eau fraîche (1) est reliée directement ou indirectement à l'espace intérieur du réservoir d'eau (10) par l'intermédiaire d'une tuyauterie (31).

10. Machine à café filtre suivant la revendication 9, **caractérisée en ce qu'**il est prévu, disposée dans la tuyauterie (31) menant du réservoir d'eau (10) à la cuve d'eau fraîche (1), une valve (30) au moyen de laquelle, à l'état ouvert, la surpression régnant dans le réservoir d'eau (10) peut être supprimée.

11. Machine à café filtre suivant la revendication 10, **caractérisée en ce que** la valve (30) est couplée à un commutateur sélectif (5) prévu pour le fonctionnement de la machine à café.
